# EUROPÄISCHE PATENTANMELDUNG

(11) **EP 0 567 762 A1**
(43) Veröffentlichungstag der Anmeldung: **03.11.1993**
(21) Anmeldenummer: 93104462.2
(22) Anmeldetag: 18.03.1993
(51) Int. Cl.: B65H 23/02, G01B 11/04, G01D 5/34

(54) **Vorrichtung zum Erfassen der Lage einer Bahnkante**

(30) Priorität: 24.03.1992 DE 4209546
(71) Anmelder: ELEKTRO-MECHANIK GMBH, D-57482 Wenden (DE)
(72) Erfinder: Wahrburg, Jürgen, Dr.-Ing., W-5277 Marienheide (DE)
(74) Vertreter: Klingseisen, Franz, Dipl.-Ing.

(57) **Zusammenfassung**

Bei einer Vorrichtung zum Ermitteln der Lage der Kante einer laufenden Materialbahn mittel eines die Bahnkante berührungsfrei erfassenden Fühlers, der aus einer sich quer zur Materialbahn erstreckenden Sendeeinheit (1) und einer Empfangseinheit (3) besteht, die beiderseits der Materialbahn (4) in einem Abstand einander gegenüberliegen, bestehen zur Erzielung einer erhöhten Störsicherheit Sendeeinheit (1) und Empfangseinheit (3) jeweils aus einzelnen Sende- und Empfangselementen (2, 5), wobei jedem Sendeelement (2) ein Empfangselement (5) gegenüberliegt.

## Beschreibung

Die Erfindung betrifft eine Vorrichtung zum Erfassen der Lage einer Bahnkante mittels eines die Bahnkante berührungsfrei erfassenden Fühlers und ein Verfahren zum Betreiben der Vorrichtung.

Bei einem Verfahren zum Feststellen der Lage einer Materialbahnkante, bei dem die laufende Bahn eine auf einen Empfänger gerichtete Lichtquelle zum Teil abdeckt, während der Empfänger mittels eines Photoelements in Abhängigkeit vom Lichtempfang ein der Lage der Kante entsprechendes Signal erzeugt, ist es aus der DE-PS 39 00 928 bekannt, im Strahlengang zwischen Lichtquelle und Empfänger eine bandförmige Anordnung von Flüssigkristall-Lichtmodulatoren in Meßrichtung quer zur Bahnkante anzuordnen, die den Empfänger abdeckt und eine Reihe elektronisch aktivierbarer Flächenbereiche aufweist. Die Flächenbereiche sind an eine Steuerschaltung für eine sequenzielle Aktivierung angeschlossen. Ein lichtdurchlässiger Flächenbereich dieser Anordnung wird schrittweise bewegt, wobei das Signal beim erst- bzw. letztmaligen Auftreffen eines Lichtstrahls an der Kante der Materialbahn erzeugt und die Lage dieses flächenbereichs zum Signalzeitpunkt ermittelt und mit der Lage der Kante gleichgesetzt wird. Hierbei wird eine Breitbandleuchte oder Leuchtstofflampe als Lichtquelle verwendet. Der von den Lichtmodulatoren abgedeckte Empfänger kann aus einem Photoelement oder aus mehreren Photoelementen bestehen.

Der Erfindung liegt die Aufgabe zugrunde, eine Vorrichtung zum Erfassen der Lage einer Bahnkante so auszubilden, daß eine erhöhte Störsicherheit erreicht wird.

Diese Aufgabe wird erfindungsgemäß durch die Merkmale im Patentanspruch 1 gelöst. Dadurch, daß einer großen Anzahl gleichartiger Sendeelemente eine gleichgroße Anzahl von Empfangselementen gegenüberliegt, werden ausschließlich parallele Strahlen ausgenutzt, so daß das Meßergebnis nicht durch Höhenschwankungen der Materialbahn zwischen Sender und Empfänger beeinflußt wird. Durch den geometrischen Aufbau der Vorrichtung und das dadurch mögliche digitale Auswertverfahren erhält man ein Meßergebnis mit sehr geringem Linearitätsfehler über einen s ehr großen Meßbereich.

Vorteilhafte Ausgestaltungen der Erfindung sind in den weiteren Ansprüchen angegeben.

Eine beispielsweise Ausführungsform der Erfindung wird nachfolgend anhand der Zeichnung näher erläutert. Es zeigen
- Fig. 1: schematische eine Vorrichtung mit Leuchtdioden als Sender und mit Photodioden als Empfänger,
- Fig. 2: eine Draufsicht auf eine zickzackförmige Anordnung der Elemente, und
- Fig. 3: eine Lichtquelle mit einer LCD-Abdeckung.

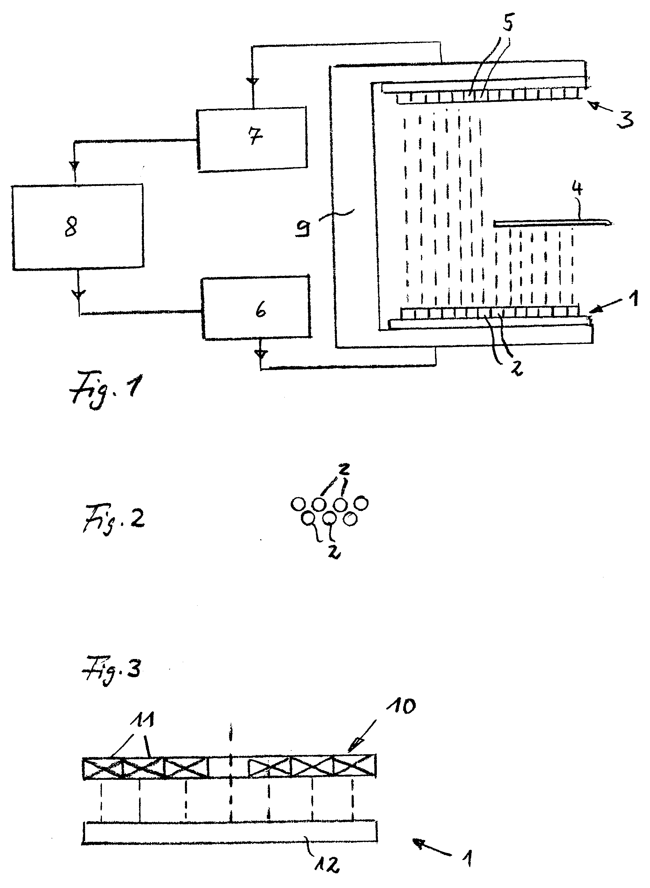

Fig. 1 zeigt eine Lichtquelle bzw. Sendeeinheit 1, die aus einer Anzahl von in einer Reihe angeordneten, einzelnen Sendeelementen 2 besteht. Diese Sendeelemente 2 sind voneinander unabhängig ansteuerbar und sie senden durch gestrichelte Linien angedeutete, parallele Lichtstrahlen aus, die durch eine Empfangseinheit 3 empfangen werden, die ebenfalls aus einer Reihe von einzelnen Empfangselementen 5 besteht. Die Anzahl der Empfangselemente 5 entspricht der Anzahl der Sendeelemente 2, wobei sich die einzelnen Sende- und Empfangselemente genau gegenüberliegen. Die Sendeelemente 2 haben voneinander den gleichen Abstand wie die Empfangselemente 5.

Die Sendeeinheit 1 und die Empfangseinheit 3 werden durch einen schematisch angedeuteten, U-förmigen Halter 9 in ihrer Stellung relativ zueinander gehalten. Zwischen Sende- und Empfangseinheit liegt eine Materialbahn 4, deren Rand eine Anzahl von Sendeelementen 2 überdeckt.

Als Sendeelemente 2 können Infrarot-Leuchtdioden und als Empfangselemente 5 spektral angepaßte Infrarot-Photodioden vorgesehen werden. Die Leuchtdioden 2 werden von einer Ansteuerelektronik 6 angesteuert und die Meßsignale der Photodioden 3 werden durch eine Verstärkungselektronik 7 verstärkt und an einen Mikrocomputer 8 weitergeleitet.

Der Mikrocomputer 8 steuert die Photodioden 5 synchron zu den Leuchtdioden 2 an, wobei die Ansteuerung eines Sendeelement- und Empfangselementpaares 2, 5 zeitlich exakt synchronisiert durch sequenzielles Einschalten einer Leuchtdiode und gleichzeitige Prüfung des empfangenen Signals der jeweils gegenüberliegenden Photodiode 5 erfolgt. Da Sende- und Empfangselemente einander genau gegenüberliegen und der Abstand der einzelnen Elemente bekannt ist, kann die momentane Position der Bahnkante als genau zwischen den beiden Elementen 2, 5 liegend ermittelt werden, bei denen der Lichtstrahl einmal noch vom gegenüberliegenden Empfangselement erfaßt wird, beim benachbarten Empfangselement jedoch durch die Materialbahn 4 unterbrochen wird. Das gleichzeitige Einschalten und Abfragen von jeweils nur einem Paar aus Sende- und Empfangselement stellt dabei sicher, daß Schwankungen der vertikalen Position der Materialbahn 4 zwischen Sende- und Empfangseinheit 1, 3 das Meßergebnis nicht beeinflussen. Ferner ist dadurch, daß jeweils nur ein Paar von Sende- und Empfangselementen eingeschaltet wird, sichergestellt, daß es kein Übersprechen zwischen den Empfangselementen gibt.

Eine Erhöhung der Störsicherheit kann erreicht werden, indem vor dem Einschalten der Leuchtdiode 2 das durch Fremdlicht oder durch sonstige Störsignale verursachte Meßsignal aufgenommen wird. Nach dem Einschalten der Leuchtdiode 2 wird das empfangene Meßsignal mit dem vorher aufgenommenen Meßsignal verglichen. Ist die Leuchtdiode von der Materialbahn überdeckt, dann ergibt sich keine Änderung bezüglich des vorher aufgenommenen Meßsignals, wenn andererseits die Lichtstrahlen ohne Behinderung von der Leuchtdiode zur Photodiode gelangen, ergibt sich eine Erhöhung des Meßsignals.

Um eine hohe Unempfindlichkeit gegen Fremdlicht zu erreichen, können die Sendeelemente 2 im Einschaltzustand mit Lichtimpulsen mit beispielsweise einer Frequenz von etwa 30 kHz betrieben werden. Die Verstärkerelektronik 7 der Empfangselemente 5 ist mit entsprechend angepaßten Bandpaßfiltern auszustatten, welche nur Empfangssignale dieser Frequenz zum Verstärker durchlassen.

Die von den Empfangselementen 5 empfangenen Signale liegen zwar in ananloger Form vor, können aber zur Auswertung in ein rein digitales Ja/Nein-Signal umgesetzt werden, das angibt, ob Licht vom zugehörigen Sendeelement empfangen wird oder nicht.

Eine solche Umsetzung in ein digitales Signal kann so ausgebildet sein , daß ein Empfangssignal über einer gewissen Schwelle in ein digitales Ja-Signal und unterhalb der Schwelle in ein digitales Nein-Signal umgesetzt wird. Eine solche Komparatorfunktion kann entweder hardwaremäßig in der Empfangseinheit 3 bzw. der Verstärkungselektronik 7 oder durch Softwaremittel im Mikrocomputer 8 realisiert werden. Wird diese Komparatorfunktion im Mikrocomputer 8 ausgeführt, ist leicht eine Anpassung des gesamten Systems an sich ändernde Umgebungsbedingungen möglich, wodurch die Sicherheit der Meßsignale weiter erhöht wird.

Es kann auch der analog vorliegende Pegel eines von der Bahn teilweise abgedeckten einzelnen Elementes zusätzlich in herkömmlicher Weise ausgewertet werden, wodurch eine höhere Genauigkeit des digitalen Meßprinzips über die durch den Abstand zweier Empfangselemente 5 gegebene Grenze hinaus erreicht wird. Dabei wird der durch die digitale Messung erhaltenen Wert mit Hilfe der analogen Messung interpoliert.

Eine Erhöhung der Genauigkeit der Feststellung der Lage der Bahnkante kann auch dadurch erreicht werden, daß anstelle einer Anordnung der Sende- und Empfangselemente 2, 5 in einer Reihe eine zickzackförmig versetzte Anordnung vorgesehen wird, bei der jeweils ein Element neben und zwischen zwei benachbarten Elemten angeordnet ist, wie dies Fig. 2 schematische zeigt.

In Fig. 3 ist eine Sendeeinheit 1, umfassend eine langgestreckte Lichtquelle 12 und eine LCD-Abdeckung 10 dargestellt. Die Lichtquelle 12 sendet kontinuierlich paralleles Licht aus, das durch die LCD-Abdeckung 10 unterteilt wird, deren Segmente 11 zwischen Lichtdurchlässigkeit und Lichtundurchlässigkeit einzeln umgeschaltet werden können, wie schematisch durch x dargestellt, so daß die einzelnen Segmente 11 einzeln ansteuerbare Sendeelement bilden.

Mit einer solchen LCD-Abdeckung 10 wird auch bei nicht unterteilter Lichtquelle 12 eine in Sendeelemente aufgeteilte Sendeeinheit erhalten. Eine Unterteilung in einzelne Elemente durch eine LCD-Abdeckung kann auch in gleicher Weise bei der Empfangseinheit 3 vorgesehen werden.

Eine derartige LCD-Abdeckung bildet eine Art Maske über der Lichtquelle 12, wobei an unterschiedlichen Stellen die Maske geöffnet und geschlossen werden kann. Nach einer anderen Ausführungsform ist es möglich, über der langestreckten Lichtquelle 12 eine in Längsrichtung der Lichtquelle 12 verschiebbare Maske mit nur einer einzelnen Öffnung vorzusehen, wobei die unterschiedlichen Stellungen der Maske verschiedenen Sendeelementen entsprechen. Durch Feststellen der Position der Maske kann ebenfalls die Position der Bahnkante ermittelt werden. Eine solche Maske würde der in Fig. 3 wiedergegebenen Abdeckung 10 entsprechen, wobei das Maskenfenster mit der Abdeckung in Längsrichtung der Lichtquelle 12 verschoben wird. Eine solche Ausführungsform kann auf der Empfängerseite mit einzelnen Empfangselementen 5 zusammenwirken, oder es kann auch auf der Empfängerseite eine solche Maske vorgesehen werden, die synchron mit der Maske auf der Sendeseite verschoben wird, so daß die Maskenfenster jeweils einander gegenüberliegen.

Zur Erhöhung der Meßfrequenz können die Leucht- und Photodioden durch sukzessive Approximation gemäß ihrer binären Wertigkeit angesteuert werden. Dabei wird z. B. zuerst ein in der Mitte angeordnetes Paar von Leucht- und Photodioden zur Messung durchgeschaltet. Sollte ein Meßsignal empfangen werden, d. h., daß sich die Materialbahn nicht zwischen Leucht- und Photodiode befindet, so wird das mittige Elementenpaar der Hälfte der Elementenreihe, die der Materialbahn näherliegt, als nächstes angesteuert. Andernfalls wird das mittige Paar der anderen Hälfte der Elementenreihe des Fühlers ausgewählt. Die Hälfte um das neue Elementenpaar wird dann wieder in zwei Hälften unterteilt, und so fort. Dieses Verfahren wird solange wiederholt, bis die an der Bahnkante liegenden Elementenpaare bestimmt sind. Bei insgesamt 2ⁿ Elementenpaaren wird die Position der Bahnkante nach dem Abfragen von nur n Elementenpaaren genau bestimmt. Dies ermöglicht ein sehr schnelles Auffinden der Bahnkante, wobei der Vorteil um so größer wird, je größer der Meßbereich ist.

Wenn sich keine Materialbahn im Meßbereich befindet, ist ein einfacher, aber sicherer Selbsttest des Systems durch einzelnes Abfragen der Paare aus Sende- und Empfangselementen möglich.

Nach dem Einbau und nach erstmaliger Einstellung der Vorrichtung in einer Anlage bleibt die erzielbare Genauigkeit konstant, und es entfallen aufwendige spätere Nach- oder Wiederholungseinstellungen.

Die Verwendnung eines frei programmierbaren Mikrocomputers erlaubt die Implementierung von Funktionen, die unter Ausnutzung der zunächst ananlog vorliegenden Empfangssignale eine sehr weitgehende automatische Anpassung des Fühlers an sich ändernde Umgebungsbedingungen ermöglicht. So können Einflüsse durch Netzspannungsschwankungen, Temperaturänderungen, Alterung und durch Verschmutzung in weiten Grenzen kompensiert werden. Bei Erreichen einer Anpassungsgrenze kann dies angezeigt werden.

Durch die Verwendnung eines Mikrocomputers bei der beschriebenen Vorrichtung kann diese ohne wesentliche Hardware-Erweiterung direkt in eine existierende Vernetzung integriert werden.

Durch die Festlegung der Anzahl und des konstanten Abstandes der benachbarten Elemente 2 bzw. 5 kann die Größe des Meßbereichs und die erzielbare Genauigkeit in weiten Grenzen an unterschiedliche Anforderungen angepaßt werden. Die beschriebene Vorrichtung eignet sich sowohl zum Einsatz bei der Regelung der Lage der Kante einer laufenden Materialbahn als auch bei der Bahnmittenregelung.

Die Erfindung wurde anhand von Sende- und Empfangseinheiten für elektromagnetische Wellen beschrieben. Es sind aber auch einzelne Sende- und Empfangseinheiten für Ultraschall und pneumatische Strahlen möglich, wobei ebenfalls Masken mit einer Öffnung verwendet werden können.

## Patentansprüche

1. Vorrichtung zum Ermitteln der Lage der Kante einer laufenden Materialbahn mittels eines die Bahnkante berührungsfrei erfassenden Fühlers, der aus einer sich quer zur Materialbahn erstreckenden Sendeeinheit (1) und einer Empfangseinheit (3) besteht, die beiderseits der Materialbahn (4) in einem Abstand einander gegenüberliegen,
**dadurch gekennzeichnet,**
daß Sendeeinheit (1) und Empfangseinheit (3) jeweils aus einzelnen Sende- und Empfangselementen (2, 5) bestehen, wobei jedem Sendeelement (2) ein Empfangselement (5) gegenünberliegt.

2. Vorrichtung nach Anspruch 1,
dadurch gekennzeichnet,
daß die Sendeelemente als in einer Reihe angeordnete Leuchtdioden (2) und die Empfangselemente als in einer Reihe angeordnete Photodioden (5) ausgebildet sind.

3. Vorrichtung nach den Ansprüchen 1 und 2,
dadurch gekennzeichnet,
daß die Sende- und Empfangselemente (2, 5) zickzackförmig versetzt zueinander jeweils in einer Reihe angeordnet sind.

4. Vorrichtung nach Anspruch 1,
dadurch gekennzeichnet,
daß die einzelnen Sende- und/oder Empfangselemente durch die Öffnung einer Maske (10) ausgebildet sind.

5. Vorrichtung nach den Ansprüchen 1-4,
dadurch gekennezeichnet,
daß Mittel zum Bestimmen, ob ein Meßwert über einem bestimmten Schwellwert liegt oder nicht, vorgesehen sind.

6. Verfahren zum Betreiben der Vorrichtung nach den Ansprüchen 1-5,
dadurch gekennzeichnet,
daß jeweils nur ein Paar von gegenüberliegenden Sende- und Empfangselementen (2, 5) angesteuert bzw. aktiviert wird.

7. Verfahren nach Anspruch 6,
dadurch gekennzeichnet,
daß die Sende- und Empfangselemente (2, 5) durch sukzessive Approximation angesteuert bzw. aktiviert werden.

8. Verfahren nach den Ansprüchen 6 und 7,
dadurch gekennzeichnet,
daß das Meßsignal eines bestimmten Empfangselementes mit dem Meßsignal, das vor dem Ansteuern des bestimmten Empfangselements (5) empfangen wurde, verglichen und festgestellt wird, ob sich eine Änderung im Meßsignal ergeben hat.

9. Verfahren nach den Ansprüchen 6 bis 8,
dadurch gekennzeichnet,
daß Lichtimpulse einer vorbestimmten Frequenz abgegeben werden.

10. Verfahren nach den Ansprüchen 6 bis 9,
dadurch gekennzeichnet,
daß die Lichtstrahlen gepulst abgegeben werden.

11. Verfahren nach den Ansprüchen 6 bis 10,
dadurch gekennezeichnet,
daß ein Meßsignal eines durch die Materialbahn (4) teilweise abgedeckten Empfangselementes (5) zusätzlich analog ausgewertet wird.
